# EUROPEAN PATENT APPLICATION

(11) **EP 4 826 788 A1**
(43) Date of publication of application: **21.10.2026**
(21) Application number: 24904458.7
(22) Date of filing: 16.12.2024
(51) Int. Cl.: H01M 4/38, H01M 4/134, H01M 10/052, H01M 4/02

(54) **NEGATIVE ELECTRODE ACTIVE MATERIAL, NEGATIVE ELECTRODE, AND SECONDARY BATTERY INCLUDING SAME**

(30) Priority: 14.12.2023 KR 20230181868
(71) Applicant: POSCO Holdings Inc., Pohang-si, Gyeongsangbuk-do 37859 (KR)
(72) Inventor: KIM, Jin-Won, Pohang-si, Gyeongsangbuk-do 37877 (KR); KANG, Eun-Tae, Pohang-si, Gyeongsangbuk-do 37877 (KR); JO, Hyun-Chul, Pohang-si, Gyeongsangbuk-do 37877 (KR); CHOI, Su-Kang, Pohang-si, Gyeongsangbuk-do 37877 (KR)
(74) Representative: Pfenning, Meinig & Partner mbB
(86) International application number: PCT/KR2024/096998
(87) International publication number: WO 2025/127895

(57) **Abstract**

Provided, according to exemplary embodiments of the present invention, is a negative electrode active material capable of improving the life characteristics of a secondary battery. The negative electrode active material comprises, in wt%,: 0.01-0.05% of iron (Fe), 0.0025-0.0035% of boron (B), 0.0025-0.0035% of phosphorus (P), and the balance of silicon (Si) and inevitable impurities. Provided, according to other exemplary embodiments of the present invention, are a negative electrode comprising the above-described negative electrode active material, and a secondary battery including same.

## Description

### Technical Field

The present disclosure relates to an anode active material, an anode, and a secondary battery including the same.

More specifically, the present disclosure relates to a lithium secondary battery.

### Background Art

Recently, as electronic devices have rapidly become more portable and wireless, there has been an increasing demand for secondary batteries that are small, lightweight, and have high energy density as a power source for driving such devices. Furthermore, high power characteristics, long-term durability, and safety are also required for small-scale consumer applications as well as large-scale secondary batteries, such as those for power storage systems and electric vehicle applications.

A secondary battery has a structure in which an electrode assembly, including a cathode, an anode, and a separator disposed between the cathode and the anode, and an electrolyte are housed in an exterior case. The electrode includes an electrode current collector and an electrode active material layer located on at least one side of the electrode current collector. Specifically, the cathode includes a cathode current collector and a cathode active material layer located on at least one surface of the cathode current collector. The anode includes an anode current collector and an anode active material layer located on at least one surface of the anode current collector.

Secondary batteries can be classified into lead-acid batteries, nickel (Ni)-cadmium (Cd) batteries, nickel (Ni)-metal hydride (MH) batteries, and lithium batteries, depending on the type of anode active material and cathode active material. Among these, the demand for lithium secondary batteries, which are excellent in terms of energy density, power characteristics, and operating time, is increasing.

The secondary battery reaction of a lithium secondary battery occurs through a chemical reaction in which lithium ions (Li⁺) move between the cathode active material and the anode active material.

In this secondary battery field, the cycle life properties of a secondary battery are a property directly linked to the long-term performance of devices that use the secondary battery as a power source, and thus much research is ongoing.
(Patent Document 1) Korean Patent Publication No. 10-1825919

### Disclosure of Invention

### Technical Problem

An object of the present disclosure is to provide an anode active material capable of improving the cycle life properties of a secondary battery, and an anode including the same. In addition, it is to provide a secondary battery with improved cycle life properties.

The objects of the present disclosure are not limited to the matters described above. A person of ordinary skill in the art to which the present disclosure pertains will have no difficulty in understanding additional objects of the present disclosure from the overall description of the specification.

### Solution to Problem

According to an exemplary embodiment of the present disclosure, an anode active material is provided. The anode active material comprises, by weight %, 0.01 to 0.05% of iron (Fe), 0.0025 to 0.0035% of boron (B), 0.0025 to 0.0035% of phosphorus (P), a remainder of silicon (Si), and unavoidable impurities.

The anode active material may include, by weight %, 0.001 to 0.005% of titanium (Ti), 0.07 to 0.12% of aluminum (Al), and 0.005 to 0.02% of calcium (Ca).

The anode active material may have a powder conductivity of 10⁻⁵ S/m or more.

The anode active material may have a particle size distribution of a D₁₀ of 1 to 5 µm, a D₅₀ of 3 to 20 µm, and a D₉₀ of 10 to 50 µm or more.

According to another exemplary embodiment of the present disclosure, an anode is provided. The anode includes: an anode current collector; and an anode active material layer provided on at least one surface of the anode current collector, the anode active material layer including, by weight %, 70 to 90% of an anode active material, 10 to 30% of a binder, and 1% or less (including 0%) of a conductive agent, wherein the anode active material may include, by weight %, 0.01 to 0.05% of iron (Fe), 0.0025 to 0.0035% of boron (B), 0.0025 to 0.0035% of phosphorus (P), a remainder of silicon (Si), and unavoidable impurities.

The anode active material layer may include less than 0.05% (including 0%) of the conductive agent.

According to still another exemplary embodiment of the present disclosure, a secondary battery is provided. The secondary battery may include: a cathode, the above-described anode, a separator interposed between the cathode and the anode, a case housing the cathode, the separator, and the anode; and an electrolyte housed in the case.

### Advantageous Effects of Invention

The anode active material according to an exemplary embodiment of the present disclosure includes a high content of silicon, and can improve the cycle life properties of a secondary battery by controlling the impurity content of the anode active material.

The anode according to another exemplary embodiment of the present disclosure can improve the cycle life properties of a secondary battery by minimizing or omitting the content of carbon in the anode.

The secondary battery according to still another exemplary embodiment of the present disclosure includes the above-described anode active material or anode, and thus can improve cycle life properties even when a liquid electrolyte is used.

Various and beneficial advantages and effects of the present disclosure are not limited to the above description, and will be more readily understood in the course of describing specific embodiments of the present disclosure.

### Brief Description of Drawings

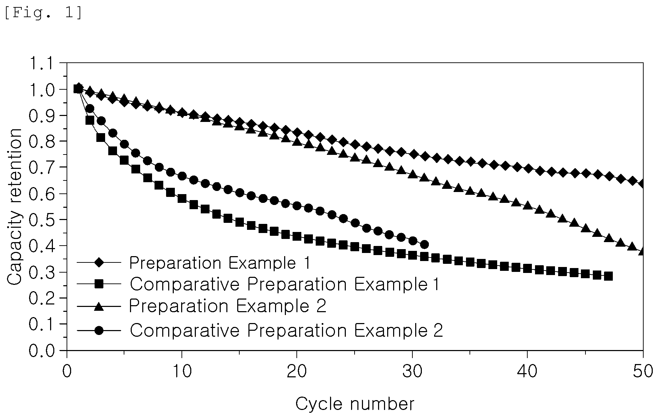

FIG. 1 is a graph showing the cycle life properties of secondary batteries according to Preparation Examples and Comparative Preparation Examples.

### Best Mode for the Invention

Hereinafter, preferred embodiments of the present disclosure will be described in detail with reference to the accompanying drawings. Prior to this, the terms or words used in the specification and claims should not be construed as being limited to ordinary or dictionary meanings, and should be construed as having meanings and concepts consistent with the technical idea of the present disclosure, based on the principle that the inventor can appropriately define the concept of terms to describe his or her own invention in the best way.

Hereinafter, when describing with reference to the drawings, the same or corresponding components will be given the same reference numerals, and redundant descriptions thereof will be omitted.

In the following examples, terms such as first and second are used for the purpose of distinguishing one component from another, not for a limiting meaning.

In the following examples, a singular expression includes a plural expression unless the context clearly indicates otherwise.

In the following examples, terms such as "comprise", "include" or "have" mean that a feature or component described in the specification exists, and do not preclude the possibility that one or more other features or components may be added.

In the drawings, the size of components may be exaggerated or reduced for convenience of description. For example, since the size and thickness of each component shown in the drawings are arbitrarily shown for convenience of description, the present disclosure is not necessarily limited to what is shown.

If an embodiment can be implemented differently, a specific process sequence may be performed differently from the described sequence. For example, two processes described in succession may be performed substantially simultaneously, or may be performed in the reverse order of the described sequence.

In addition, in describing the present disclosure, when it is determined that a detailed description of a related known configuration or function may obscure the gist of the present disclosure, the detailed description thereof will be omitted.

In the present disclosure, having a micro-scale size is based on D₅₀ in the particle size distribution of particles. That is, it means a case where D₅₀ is 1.0 µm or more. Therefore, even if the D₁₀ of a certain particle is smaller than 1.0 µm, if the D₅₀ of the particle is 1.0 µm or more, it can be interpreted that the particle has a micro-scale size according to the present disclosure.

In the present disclosure, D₅₀, D₁₀, and D₉₀ can be defined as particle diameters corresponding to 50%, 10%, and 90% of the cumulative volume, respectively, in the particle size distribution curve of particles. The D₅₀, D₁₀, and D₉₀ can be measured, for example, using a laser diffraction method. The laser diffraction method is generally capable of measuring particle diameters from the submicron region to several mm, and can obtain results with high reproducibility and high resolution.

Hereinafter, an anode and an anode active material according to exemplary embodiments of the present disclosure will be described in detail.

### [Anode]

According to exemplary embodiments, an anode may include an anode current collector and an anode active material layer.

The anode current collector is not particularly limited as long as it has high conductivity without causing a chemical change in the battery. As a non-limiting example, the anode current collector may include one or more selected from copper, stainless steel, aluminum, nickel, titanium, calcined carbon, copper or stainless steel surface-treated with carbon, nickel, titanium, silver, or the like, and an aluminum-cadmium alloy.

The thickness of the anode current collector may be 3 to 500 µm.

The anode active material layer may be provided on one surface or both surfaces of the anode current collector. The anode active material layer may be obtained by coating and drying an anode slurry including a binder, a conductive agent, and an anode active material on the anode current collector. However, according to exemplary embodiments, the conductive agent may be added in a trace amount or omitted in the anode active material layer.

More specifically, the anode active material layer may include, by weight % based on the total weight of the anode active material layer, 70 to 90% of an anode active material, 10 to 30% of a binder, and less than 0.05% (including 0%) of a conductive agent. Hereinafter, each material will be described in detail.

According to exemplary embodiments, the binder may be included in an amount of 10 to 30% by weight %.

The binder is a component that assists in the bonding between the anode active material and the current collector. As a non-limiting example, the anode binder may include one or more selected from polyvinyl alcohol, carboxymethyl cellulose/styrene-butadiene rubber, hydroxypropyl cellulose, diacetylene cellulose, polyvinyl chloride, polyvinylpyrrolidone, polytetrafluoroethylene, polyvinylidene fluoride, polyethylene, or polypropylene.

According to exemplary embodiments, the conductive agent may be included in an amount of less than 0.05% (including 0%) by weight %.

The conductive agent is a component for improving the conductivity of the anode active material. However, the conductive agent itself has high electrical conductivity, and its large specific surface area due to its small particle size can cause side reactions with the electrolyte. As a result, a thick Solid Electrolyte Interphase (SEI) may be formed on the surface of the anode active material layer. In this case, the irreversible capacity of the anode may be increased, and the resistance of the anode itself may be increased, thereby deteriorating the performance of the secondary battery. In addition, the conductive agent may cause an electrolyte decomposition reaction to generate gas. As a result, gas may accumulate inside the secondary battery, causing a so-called swelling phenomenon in which the secondary battery swells, which may deteriorate the safety of the secondary battery.

From the above, it is preferable that the conductive agent be included in a minimum amount. According to exemplary embodiments, the conductive agent may be included in an amount of 1% or less by weight %. More specifically, the conductive agent may be included in an amount of less than 0.05% by weight %. The conductive agent may be omitted.

As a non-limiting example, the conductive agent may include one or more selected from: graphite such as carbon nanotubes, natural graphite, artificial graphite, or the like; carbon black such as acetylene black, Ketjen black, channel black, furnace black, lamp black, thermal black, or the like; conductive fibers such as carbon fibers, metal fibers, or the like; metal powders such as fluorocarbon, aluminum, nickel powder, or the like; conductive whiskers such as zinc oxide, potassium titanate, or the like; conductive metal oxides such as titanium oxide or the like; and conductive materials such as polyphenylene derivatives or the like.

### [Anode Active Material]

According to exemplary embodiments, it may include, by weight %, 0.01 to 0.05% of iron (Fe), 0.0025 to 0.0035% of boron (B), 0.0025 to 0.0035% of phosphorus (P), 0.001 to 0.005% of titanium (Ti), 0.07 to 0.12% of aluminum (Al), 0.005 to 0.02% of calcium (Ca), a remainder of silicon (Si), and unavoidable impurities. More specifically, silicon (Si) may be included in an amount of 99% or more. Silicon (Si) may be included in an amount of 99.5% or more. Silicon (Si) may be included in an amount of 99.9% or more.

Conventional silicon-based anode active materials have been provided in a form existing in a graphene or silicon oxide (SiOx) matrix. However, in this case, the silicon content in the anode active material was about 30 to 50%, which was a relatively low silicon content.

However, according to exemplary embodiments, the anode active material includes a high content of silicon. As a result, the anode active material can further improve the energy density per weight and per volume of the anode.

In addition, by controlling the contents of iron, boron, and phosphorus within the above-mentioned ranges, the powder conductivity of the anode active material can be increased. As a result, the energy consumed during the insertion and deinsertion of lithium ions in the charging and discharging process of the secondary battery can be reduced. In addition, a uniform charge/discharge reaction can occur between a region adjacent to the surface of the anode active material layer and a region adjacent to the anode current collector. As a result, the charge/discharge properties and cycle life properties of the secondary battery can be improved. As a non-limiting example, the contents of iron, boron, and phosphorus can be controlled through a de-ironing process after classification and sieving of the silicon raw material.

According to exemplary embodiments, the anode active material may have a powder conductivity of 10⁻⁵ S/m or more. Powder conductivity is a physical quantity indicating the degree to which the powder of an anode active material can carry charge, and it means the value obtained by converting the sheet resistance value, measured after making the powder of the measured substance into a pellet, into conductivity.

Meanwhile, titanium, aluminum, and calcium may be unavoidable impurities that are added during the manufacturing process of the anode active material or are not removed from the raw materials.

According to exemplary embodiments, the anode active material may have a particle size distribution of a D₁₀ of 1 to 5 µm, a D₅₀ of 3 to 20 µm, and a D₉₀ of 10 to 50 µm or more.

In order to improve the cycle life properties of a secondary battery, it is important to reduce the specific surface area of the anode active material. This is because as the specific surface area of the anode active material increases, the contact area with the electrolyte increases excessively, increasing the possibility of side reactions. For example, a thick SEI film may be formed on the surface of the anode active material, which may reduce the active area of the anode. In addition, it may cause an electrolyte decomposition reaction to generate excessive gas inside the secondary battery cell. Above all, the electrolyte decomposition reaction may consume lithium ions, causing performance degradation of the secondary battery. As a result, as the number of charge/discharge cycles of the secondary battery increases, the charge/discharge capacity of the secondary battery may decrease. That is, the cycle life properties of the secondary battery may be deteriorated.

In order to reduce the specific surface area of the anode active material, a method of increasing the size of the anode active material particles may be considered. According to exemplary embodiments, the anode active material includes micro-scale silicon-based particles. By using such coarse-sized silicon-based particles, the specific surface area of the anode active material can be reduced. As a result, the long-term cycle life properties of the secondary battery can be effectively improved.

### [Secondary Battery]

A lithium secondary battery according to an embodiment of the present disclosure may more specifically include a cathode, an anode, a separator interposed between the cathode and the anode, an electrolyte, and a case housing them.

The anode is as described above.

The cathode may include a cathode current collector and a cathode active material layer disposed on the cathode current collector, and the cathode active material layer may include a cathode active material.

The cathode current collector is not particularly limited as long as it has conductivity without causing a chemical change in the battery, and for example, stainless steel, aluminum, nickel, titanium, calcined carbon, or aluminum or stainless steel surface-treated with carbon, nickel, titanium, silver, or the like may be used. In addition, the cathode current collector may typically have a thickness of 3 to 500 µm, and fine irregularities may be formed on the surface of the cathode current collector to increase the adhesion of the cathode active material. For example, it can be used in various forms such as a film, a sheet, a foil, a net, a porous body, a foam, and a non-woven fabric.

As the cathode active material, a compound capable of reversibly intercalating and deintercalating lithium (lithiated intercalation compound) can be used. Specifically, one or more of composite oxides of lithium and a metal selected from cobalt, manganese, nickel, and combinations thereof can be used, and a specific example thereof may be a compound represented by any one of the following chemical formulas:
LiaA1-bBbD2 (where 0.90 ≤ a ≤ 1.8 and 0 ≤ b ≤ 0.5); LiaE1-bBbO2-cDc (where 0.90 ≤ a ≤ 1.8, 0 ≤ b ≤ 0.5, and 0 ≤ c ≤ 0.05); LiE2-bBbO4-cDc (where 0 ≤ b ≤ 0.5 and 0 ≤ c ≤ 0.05); LiaNi1-b-cCobBcDα (where 0.90 ≤ a ≤ 1.8, 0 ≤ b ≤ 0.5, 0 ≤ c ≤ 0.05, and 0 < α ≤ 2); LiaNi1-b-cCobBcO2-αTα (where 0.90 ≤ a ≤ 1.8, 0 ≤ b ≤ 0.5, 0 ≤ c ≤ 0.05, and 0 < α < 2); LiaNi1-b-cCobBcO2-αT2 (where 0.90 ≤ a ≤ 1.8, 0 ≤ b ≤ 0.5, 0 ≤ c ≤ 0.05, and 0 < α < 2); LiaNi1-b-cMnbBcDα (where 0.90 ≤ a ≤ 1.8, 0 ≤ b ≤ 0.5, 0 ≤ c ≤ 0.05, and 0 < α ≤ 2); LiaNi1-b-cMnbBcO2-αTα (where 0.90 ≤ a ≤ 1.8, 0 ≤ b ≤ 0.5, 0 ≤ c ≤ 0.05, and 0 < α < 2); LiaNi1-b-cMnbBcO2-αT2 (where 0.90 ≤ a ≤ 1.8, 0 ≤ b ≤ 0.5, 0 ≤ c ≤ 0.05, and 0 < α < 2); LiaNibEcGdO2 (where 0.90 ≤ a ≤ 1.8, 0 ≤ b ≤ 0.9, 0 ≤ c ≤ 0.5, and 0.001 ≤ d ≤ 0.1); LiaNibCocMndGeO2 (where 0.90 ≤ a ≤ 1.8, 0 ≤ b ≤ 0.9, 0 ≤ c ≤ 0.5, 0 ≤ d ≤ 0.5, and 0.001 ≤ e ≤ 0.1); LiaNiGbO2 (where 0.90 ≤ a ≤ 1.8 and 0.001 ≤ b ≤ 0.1); LiaCoGbO2 (where 0.90 ≤ a ≤ 1.8 and 0.001 ≤ b ≤ 0.1); LiaMnGbO2 (where 0.90 ≤ a ≤ 1.8 and 0.001 ≤ b ≤ 0.1); LiaMn2GbO4 (where 0.90 ≤ a ≤ 1.8 and 0.001 ≤ b ≤ 0.1); QO2; QS2; LiQS2; V2O5; LiV2O5; LiIO2; LiNiVO4; Li(3-f)J2(PO4)3 (0 ≤ f ≤ 2); Li(3-f)Fe2(PO4)3 (0 ≤ f ≤ 2); and LiFePO4.

In the chemical formulas, A is Ni, Co, Mn, or a combination thereof; B is Al, Ni, Co, Mn, Cr, Fe, Mg, Sr, V, a rare earth element, or a combination thereof; D is O, F, S, P, or a combination thereof; E is Co, Mn, or a combination thereof; T is F, S, P, or a combination thereof; G is Al, Cr, Mn, Fe, Mg, La, Ce, Sr, V, or a combination thereof; Q is Ti, Mo, Mn, or a combination thereof; I is Cr, V, Fe, Sc, Y, or a combination thereof; and J may be V, Cr, Mn, Co, Ni, Cu, or a combination thereof.

The cathode active material layer may further include a binder and/or a conductive agent along with the above-described cathode active material.

The binder serves to improve the adhesion between the cathode active material particles and the adhesion between the cathode active material and the cathode current collector. Specific examples include polyvinylidene fluoride (PVDF), vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, ethylene-propylene-diene monomer rubber (EPDM rubber), sulfonated-EPDM, styrene butadiene rubber (SBR), fluoro rubber, or various copolymers thereof, and one or a mixture of two or more of these may be used, but is not limited thereto. The binder may be included in an amount of 1 to 30% by weight % based on the total weight of the cathode active material layer.

The conductive agent is used to impart conductivity to the electrode, and can be used without particular limitation as long as it has electron conductivity without causing a chemical change in the battery. Specific examples include graphite such as natural graphite, artificial graphite or the like; carbon-based materials such as carbon black, acetylene black, Ketjen black, channel black, furnace black, lamp black, thermal black, carbon fibers or the like; metal powders or metal fibers such as copper, nickel, aluminum, silver or the like; conductive whiskers such as zinc oxide, potassium titanate or the like; conductive metal oxides such as titanium oxide or the like; or conductive polymers such as polyphenylene derivatives or the like, and one or a mixture of two or more of these may be used, but is not limited thereto. The conductive agent may typically be included in an amount of 1 to 30% by weight % based on the total weight of the cathode active material layer.

The cathode may be manufactured according to a conventional cathode manufacturing method. For example, it can be manufactured by coating a cathode slurry including a cathode active material, a binder, and a conductive agent on one or both surfaces of a cathode current collector, and then drying and rolling it.

The separator separates the cathode and the anode and provides a passage for lithium ions, and can be used without particular limitation as long as it is a separator commonly used in lithium secondary batteries. In particular, it is preferable that it has low resistance to ion movement of the electrolyte and excellent electrolyte impregnation ability. Specifically, a porous polymer film, for example, a porous polymer film made of a polyolefin-based polymer such as an ethylene homopolymer, a propylene homopolymer, an ethylene/butene copolymer, an ethylene/hexene copolymer, and an ethylene/methacrylate copolymer, or a laminated structure of two or more layers thereof may be used. In addition, a conventional porous non-woven fabric, for example, a non-woven fabric made of high-melting-point glass fibers, polyethylene terephthalate fibers, or the like may be used. In addition, a coated separator including a ceramic component or a polymer material may be used to secure heat resistance or mechanical strength, and it may be optionally used in a single-layer or multi-layer structure.

According to exemplary embodiments, the electrolyte may include a liquid electrolyte usable in manufacturing a lithium secondary battery. More specifically, it may be one or more of an organic liquid electrolyte and an inorganic liquid electrolyte. As such, since the secondary battery according to exemplary embodiments uses the above-described anode active material and anode, it can minimize the volume expansion of the anode and minimize side reactions with the electrolyte even when a liquid electrolyte is used. As a result, swelling of the secondary battery can be prevented, and cycle life properties can be improved.

The organic liquid electrolyte may include an organic solvent and a lithium salt.

The organic solvent can be used without particular limitation as long as it can serve as a medium in which ions involved in the electrochemical reaction of the battery can move. Specifically, the organic solvent may be an ester-based solvent such as methyl acetate, ethyl acetate, γ-butyrolactone, ε-caprolactone or the like; an ether-based solvent such as dibutyl ether, tetrahydrofuran or the like; a ketone-based solvent such as cyclohexanone or the like; an aromatic hydrocarbon-based solvent such as benzene, fluorobenzene or the like; a carbonate-based solvent such as dimethylcarbonate (DMC), diethylcarbonate (DEC), methylethylcarbonate (MEC), ethylmethylcarbonate (EMC), ethylene carbonate (EC), propylene carbonate (PC) or the like; an alcohol-based solvent such as ethyl alcohol isopropyl alcohol or the like; a nitrile such as R-CN (where R is a C2 to C20 linear, branched, or cyclic hydrocarbon group, and may include a double-bonded aromatic ring or an ether bond) or the like; an amide such as dimethylformamide or the like; a dioxolane such as 1,3-dioxolane or the like; or a sulfolane. Among these, a carbonate-based solvent is preferable, and a mixture of a cyclic carbonate (e.g., ethylene carbonate, propylene carbonate or the like) having high ionic conductivity and a high dielectric constant, which can improve the charge/discharge performance of the battery, and a low-viscosity linear carbonate-based compound (e.g., ethylmethylcarbonate, dimethylcarbonate, diethylcarbonate or the like) is more preferable. In this case, when the cyclic carbonate and the chain carbonate are mixed in a volume ratio of about 1:1 to about 1:9, the performance of the electrolyte can be excellent.

The lithium salt can be used without particular limitation as long as it is a compound that can provide lithium ions used in a lithium secondary battery. Specifically, the lithium salt may be LiPF6, LiClO4, LiAsF6, LiBF4, LiSbF6, LiAlO4, LiAlCl4, LiCF3SO3, LiC4F9SO3, LiN(C2F5SO3)2, LiN(C2F5SO2)2, LiN(CF3SO2)2, LiCl, LiI, or LiB(C2O4)2 or the like. The concentration of the lithium salt is preferably in the range of 0.1 to 2.0 M. When the concentration of the lithium salt is included in the above range, the electrolyte has appropriate conductivity and viscosity, so that excellent electrolyte performance can be exhibited, and lithium ions can move effectively.

In addition to the electrolyte components, the electrolyte may further include one or more additives for the purpose of improving the cycle life properties of the battery, suppressing a decrease in battery capacity, improving the discharge capacity of the battery, and the like, for example, a haloalkylene carbonate-based compound such as difluoroethylene carbonate or the like, pyridine, triethyl phosphite, triethanolamine, a cyclic ether, ethylene diamine, n-glyme, hexamethylphosphoric triamide, a nitrobenzene derivative, sulfur, a quinone imine dye, an N-substituted oxazolidinone, an N,N-substituted imidazolidine, an ethylene glycol dialkyl ether, an ammonium salt, pyrrole, 2-methoxyethanol, or aluminum trichloride. At this time, the additive may be included in an amount of 0.1 to 5% by weight % based on the total weight of the electrolyte.

The case is not particularly limited as long as it can appropriately house the members constituting the above-described secondary battery. The shape of the case may be one or more selected from the group consisting of a cylindrical shape using a can, a prismatic shape, a pouch shape, and a coin shape. However, the shape of the battery case is not limited thereto, and may have various types of shapes used in the industry.

### Mode for the Invention

Hereinafter, embodiments of the present disclosure will be described in detail so that a person of ordinary skill in the art to which the present disclosure pertains can easily carry them out. However, the present disclosure may be embodied in many different forms and is not limited to the embodiments described herein.

### (Example)

An anode active material having a particle size distribution and a component composition as shown in Table 1 below was prepared.

**[Table 1]**

| particle size distribution | | | component composition | | | | Powder conductivity (S/m) |
|---|---|---|---|---|---|---|---|
| D10 | D50 | D90 | Si | Fe | B | P | |
| (*µ*m) | (*µ*m) | (*µ*m) | (wt%) | (wt%) | (wt%) | (wt%) | |
| 1.26 | 3.3945 | 6.176 | 99.8 | 0.04 | 0.0030 | 0.0025 | 1.9 X 10⁻⁵ |

An anode was manufactured using the anode active material according to Table 1 above. Polyacrylic acid (PAA) was used as a binder required for manufacturing the anode. Super C65 (from Timcal) was used as a conductive agent. At this time, the ratio of anode active material:binder:conductive agent was as shown in Table 2 below. A secondary battery (2032 Coin Half Cell) was manufactured by impregnating the manufactured anode in an electrolyte. As the electrolyte, an organic liquid electrolyte was used, and the organic liquid electrolyte used was an organic liquid electrolyte in which 1.0 M LiPF6 was mixed in an organic solvent in which ethyl methyl carbonate:ethylene carbonate were mixed at a ratio of 7:3. At this time, lithium metal was used as a counter electrode.

**[Table 2]**

| classification | Amount of anode active material(wt%) | Amount of binder(wt%) | Amount of conductive(wt%) |
|---|---|---|---|
| Preparation Example 1 | 80 | 20 | 0 |
| Preparation Example 2 | 90 | 10 | 0 |
| Comparative Preparation Example 1 | 60 | 30 | 10 |
| Comparative Preparation Example 2 | 90 | 9.95 | 0.05 |

The cycle life properties of the secondary batteries according to the Preparation Examples and Comparative Preparation Examples shown in Table 2 and the relative volume expansion rate of the anode were measured.

For the cycle life properties of the secondary batteries, each of the secondary batteries according to the Preparation Examples and Comparative Preparation Examples shown in Table 2 was repeatedly charged and discharged under predetermined conditions. The charge/discharge efficiency was confirmed by measuring the charge capacity and discharge capacity of the secondary batteries for each cycle (charge-discharge).

Charging of the secondary batteries was performed under the control of 0.5C, 0.5mV CC-CV, and a cut-off current of 0.005C. CC-CV means a constant current-constant voltage charging method.

Discharging of the secondary batteries was performed under the control of 0.5C and a cut-off voltage of 1.0V.

In this experimental example, a 1C rate was defined as 2,500 mAh/gSi, and after calculating the current, charging and discharging were performed at 0.5C according to the weight (g) of Si (active material) of the electrode.

FIG. 1 is a graph showing the cycle life properties of secondary batteries according to Preparation Examples and Comparative Preparation Examples.

Referring to FIG. 1, in the case of the secondary batteries according to Comparative Preparation Example 1 and Comparative Preparation Example 2, in which the content of the conductive agent was outside the range suggested by the present disclosure, it was confirmed that the capacity could not be maintained from the beginning of the charge/discharge cycle. On the other hand, in the case of the secondary batteries according to Preparation Example 1 and Preparation Example 2, in which no conductive agent was added, it was confirmed that the capacity was maintained during the charge/discharge cycle. In particular, in the case of Preparation Example 1 and Preparation Example 2, in which no conductive agent was added, it was confirmed that the charge/discharge efficiency was the highest.

The volume expansion rate of the anode was compared by measuring the volume change of the anode during the charge/discharge test of the anode.

More specifically, the volume expansion rate of the anode was calculated through the following equation. [Equation 1] 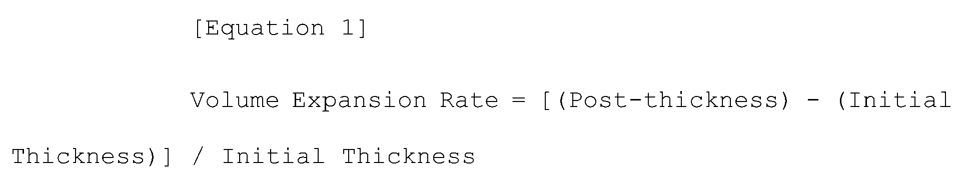 Volume Expansion Rate = [(Post-thickness) - (Initial Thickness)] / Initial Thickness

The initial thickness was measured as the thickness of the anode active material layer (the thickness of the anode excluding the thickness of the anode current collector) before assembly of the secondary battery. This is because the part where the volume substantially changes during the charging and discharging process of the secondary battery is the anode active material layer containing the active material. The post-thickness was measured by disassembling the secondary battery in the 51st charged state after 50 charge/discharge cycles of the secondary battery and measuring the thickness of the anode. Likewise, the thickness of the anode active material layer was measured as the post-thickness.

Thereafter, the volume expansion rates of the other preparation examples were evaluated based on the volume expansion rate of the secondary battery according to Comparative Preparation Example 1.

**[Table 3]**

| classification | Relative volume expansion rate (%) |
|---|---|
| Preparation Example 1 | 0.46 |
| Preparation Example 2 | 0.539 |
| Comparative Preparation Example 1 | 1 |
| Comparative Preparation Example 2 | 0.619 |

Referring to Table 3, it was confirmed that in the case of Comparative Preparation Example 1, in which the content of the conductive agent was excessively high, the volume expansion rate of the anode was the highest. In addition, even in the case of Comparative Preparation Example 2, in which the content of the conductive agent was very small, the volume expansion rate was measured to be relatively high. On the other hand, it was confirmed that when no conductive agent was added, the volume expansion rate was relatively small.

From the above, it was confirmed that according to the anode active material and the anode including the same according to the exemplary embodiments, the cycle life properties of a secondary battery can be improved, and the swelling phenomenon of the secondary battery due to the volume expansion of the anode can be prevented.

The present disclosure has been described in more detail above with reference to the drawings, examples, and the like. However, the configurations described in the drawings, examples, etc. described in this specification are only one embodiment of the present disclosure and do not represent all of the technical ideas of the present disclosure, and therefore, it should be understood that there may be various equivalents and modifications that can replace them at the time of filing of the present application.

## Claims

1. An anode active material, comprising,
by weight %: 0.01 to 0.05% of iron (Fe); 0.0025 to 0.0035% of boron (B); 0.0025 to 0.0035% of phosphorus (P); a remainder of silicon (Si); and unavoidable impurities.

2. The anode active material of claim 1,
wherein the anode active material comprises, by weight %: 0.001 to 0.005% of titanium (Ti); 0.07 to 0.12% of aluminum (Al); and 0.005 to 0.02% of calcium (Ca).

3. The anode active material of claim 1,
wherein the anode active material has a powder conductivity of 10⁻⁵ S/m or more.

4. The anode active material of claim 1,
wherein the anode active material has a particle size distribution of a D₁₀ of 1 to 5 µm, a D₅₀ of 3 to 20 µm, and a D₉₀ of 10 to 50 µm or more.

5. An anode, comprising:
an anode current collector; and
an anode active material layer provided on at least one surface of the anode current collector,
the anode active material layer comprising, by weight %: 70 to 90% of an anode active material; 10 to 30% of a binder; and 1% or less (including 0%) of a conductive agent,
wherein the anode active material comprises, by weight %: 0.01 to 0.05% of iron (Fe), 0.0025 to 0.0035% of boron (B), 0.0025 to 0.0035% of phosphorus (P), a remainder of silicon (Si), and unavoidable impurities.

6. The anode of claim 5,
wherein the anode active material layer comprises less than 0.05% (including 0%) of the conductive agent.

7. The anode of claim 5,
wherein the anode active material has a particle size distribution of a D₁₀ of 1 to 5 µm, a D₅₀ of 3 to 20 µm, and a D₉₀ of 10 to 50 µm or more.

8. The anode of claim 5, wherein the anode active material has a powder conductivity of 10⁻⁵ S/m or more.

9. A secondary battery, comprising:
a cathode;
the anode according to any one of claims 5 to 8;
a separator interposed between the cathode and the anode;
a case housing the cathode, the separator, and the anode; and
an electrolyte housed in the case.
